Europäisches Patentamt

European Patent Office

Office européen des brevets

(11) Numéro de publication: **0 157 059**
**A1**

## (12) DEMANDE DE BREVET EUROPEEN

(21) Numéro de dépôt: **84402603.9**

(22) Date de dépôt: **14.12.84**

(51) Int. Cl.⁴: **F 16 H 1/20**

(30) Priorité: **16.12.83 FR 8320199**

(43) Date de publication de la demande: **09.10.85**
**Bulletin 85/41**

(84) Etats contractants désignés: **AT BE CH DE GB IT LI LU NL SE**

(71) Demandeur: **USINES BEYER FRERES, Société dite :, 37, rue de la Ménantille, F-88100 Saint-Die (FR)**

(72) Inventeur: **Poulin, Jean-Louis, "Les Noisetiers" Route de Dijon, F-88100 Saint-Die (FR)**

(74) Mandataire: **Chevallier, Robert Marie Georges, Cabinet BOETTCHER 23, rue La Boétie, F-75008 Paris (FR)**

(54) **Dispositif pour encaisser une charge axiale sur un arbre tournant.**

(57) Dispositif pour encaisser une charge axiale sur un arbre tournant.

Un arbre tournant (1) soumis à une force axiale (FA) est muni de deux pignons dentés (4, 5) à denture inclinée en sens inverses, un arbre secondaire (6) supporté parallèlement à l'arbre tournant (1) est pourvu de deux roues dentées (9, 10) qui engrènent avec les pignons dentés (4, 5) et d'une butée axiale (11) capable de supporter la force axiale (FA) qui est transmise de l'arbre tournant (1) à l'arbre secondaire (6).

EP 0 157 059 A1

ACTORUM AG

# Dispositif pour encaisser une charge axiale sur un arbre tournant.

L'invention a pour objet un dispositif qui a pour rôle d'encaisser ou autrement dit de contre-balancer une charge axiale qui s'exerce sur un arbre tournant.

Il arrive assez fréquemment qu'un arbre faisant partie d'une machine ou d'un mécanisme soit soumis à une force qui s'exerce dans son sens longitudinal sans que l'on puisse utiliser une butée classique bien connue pour immobiliser cet arbre contre l'effet de cette force. Une telle impossibilité résulte souvent de ce que l'arbre en question est monté à proximité d'un autre arbre ou de plusieurs autres arbres ou d'autres pièces ou organes. Pour cette raison, on ne dispose pas autour de cet arbre de la place nécessaire à l'installation d'une unique butée ayant en sens transversal à l'arbre les dimensions nécessaires pour supporter la charge axiale à encaisser.

Une solution classique connue consiste alors à utiliser plusieurs butées à dimensions transversales réduites en fonction de la place disponible et à les monter à la suite les unes des autres le long de l'arbre. Ce moyen est rarement satisfaisant parce que la force se répartit inégalement entre les butées successives, de sorte que la plus chargée se détériore prématurément.

L'invention a pour but principal d'apporter un dispositif qui permet de faire supporter par une butée unique convenablement dimensionnée, la force axiale qui peut être exercée sur un arbre tournant sur lequel il n'est pas possible de monter directement une butée de dimensions suffisantes.

Etant donné un arbre tournant supporté par des paliers simplement pour être guidé en rotation, soumis à une force axiale tendant à le déplacer dans son sens longitudinal, selon l'invention on monte sur cet arbre deux pignons dentés ayant chacun une denture inclinée, les dentures étant inclinées en sens opposés, de préférence d'un même angle ; un arbre secondaire de butée est supporté libre en rotation parallèlement à l'arbre tournant et il est pourvu de deux roues dentées qui engrènent respectivement chacune avec un pignon denté. On peut donner à ces roues dentées le diamètre qui convient afin d'espacer suffisamment l'arbre secondaire de l'arbre tournant et de trouver la place nécessaire au montage sur cet arbre secondaire d'une unique butée capable de supporter la force axiale.

En effet, cette force axiale est répartie entre les pignons dentés et transmise par ceux-ci aux roues dentées sous forme d'un couple ayant une composante tangentielle et une composante axiale. Du fait de l'inclinaison en sens inverses des dentures les composantes tangentielles sont de sens opposés et s'annulent et les composantes axiales sont de même sens et s'additionnent. Leur total, égal à la force axiale, est encaissé par l'unique butée de l'arbre secondaire sur laquelle se trouve reportée ainsi la force axiale.

On remarquera que le dispositif de l'invention est utilisable aussi bien lorsque l'arbre tournant ne transmet pas de couple de rotation que lorsqu'il constitue un arbre moteur transmettant un couple moteur, ou un arbre récepteur supportant un couple résistant, ou simplement un arbre intermédiaire transmettant un couple et recevant une charge axiale de l'organe ou de la machine qu'il entraîne. De même l'arbre secondaire peut être laissé libre en rotation en étant simplement entraîné par l'arbre tournant, mais il peut aussi servir d'arbre menant l'arbre tournant.

Dans la définition de l'invention donnée ci-dessus, les pignons dentés calés sur l'arbre tournant sont directement en prise avec les roues dentées de l'arbre secondaire à butée axiale. Il est possible de faire engrener chacun des deux pignons de l'arbre tournant avec des pignons intermédiaires engrenant eux-mêmes avec les roues dentées. En particulier, ces pignons intermédiaires peuvent être des pignons satellites disposés autour de l'arbre tournant et portés par un porte-satellites fixe . L'ensemble de ces pignons satellites engrène alors avec une couronne dentée intérieurement qui entoure l'arbre ——————————— tournant et qui est retenue en sens axial par une unique butée dans une direction axiale ou dans chacune des deux directions axiales. On peut donner à cette couronne dentée un diamètre suffisant pour qu'elle contienne à proximité de l'arbre tournant un second arbre tournant disposé parallèlement. Un tel montage est utile par exemple pour l'entraînement des deux vis d'une extrudeuse.

Pour bien faire comprendre l'invention, on donnera maintenant, uniquement à titre d'exemple, une description de plusieurs modes de réalisation. On se reportera aux dessins annexés dans lesquels :

- la figure 1 est une vue générale de dessus d'un arbre tournant équipé d'un dispositif conforme à l'invention,

- la figure 2 est une vue analogue à la figure 1 montrant une variante de réalisation, ,

- la figure 3 est une vue générale en coupe d'un réducteur pour l'entraînement des vis d'une extrudeuse dans lequel le dispositif de l'invention est utilisé,

- la figure 4 est une vue générale de dessus et en coupe de deux arbres voisins dont l'un est équipé d'un dispositif conforme à l'invention,

- la figure 5 est une représentation schématique vue d'un bout des engrenages de la figure 4,

- la figure 6 est une vue analogue à la figure 4 avec un perfectionnement supplémentaire.

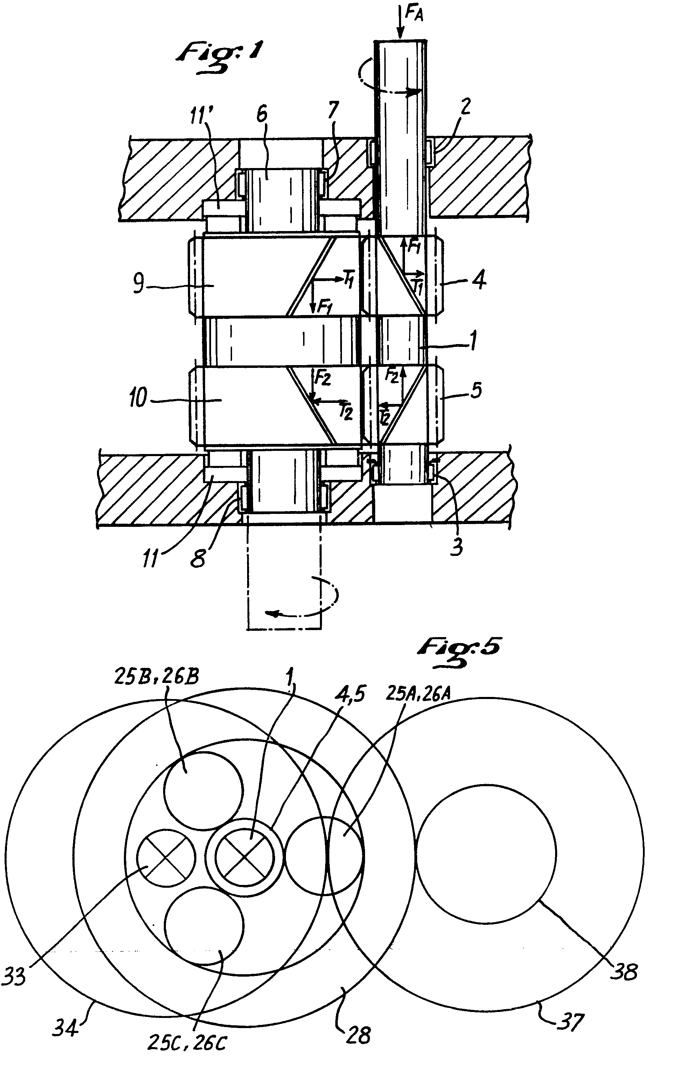

Sur la figure 1, on voit un arbre tournant 1 supporté librement en rotation par deux paliers espacés 2,3 ; on suppose que cet arbre tournant 1 est soumis, pour une raison quelconque, à une force axiale FA, et qu'il est impossible de l'équiper d'une unique butée axiale ayant un diamètre suffisant pour qu'elle soit capable d'encaisser cette force FA. Selon l'invention, on cale sur l'arbre tournant 1 deux pignons dentés 4,5 à denture inclinée, par exemple hélicoïdale, dont les inclinaisons, d'un pignon à l'autre, sont dans des sens opposés. Un arbre secondaire 6 est placé parallèlement à l'arbre tournant 1, dans des paliers 7, 8. Sur cet arbre secondaire 6 sont calés en rotation deux roues dentées 9,10 qui engrènent respectivement chacune avec les pignons dentés 4,5.

La force axiale FA se répartit entre les pignons dentés 4, 5 en forces qui sont transmises aux roues dentées 9,10 où elles peuvent être décomposées sur chacune d'elles en une force axiale $F_1$, $F_2$ respectivement et une force tangentielle $T_1$, $T_2$ respectivement. Par suite de l'inclinaison des dentures en sens opposés, les forces axiales $F_1$, $F_2$ sont dirigées dans le même sens tandis que les forces tangentielles $T_1$ et $T_2$ donnent naissance à des couples opposés qui s'annulent. On a l'équation $F_1 + F_2 = FA$ ; ainsi la force FA est reportée sans autre conséquence sur l'arbre secondaire 6. On peut donner aux roues dentées 9,10 un diamètre assez grand pour que l'on puisse écarter suffisamment l'arbre secondaire 6 de l'arbre tournant 1 et l'équiper d'une unique butée axiale 11 de dimensions convenables pour qu'elle supporte à elle seule la somme $F_1 + F_2$. Ainsi, on peut toujours utiliser comme butée axiale 11 un roulement à rouleaux, par exemple, disponible dans le commerce.

Sur la figure 1, on a représenté sur l'arbre secondaire 6 une butée axiale opposée 11' pour permettre la rotation de l'arbre 1 dans les deux sens. On a prolongé en trait mixte vers le bas de la figure 1, l'arbre secondaire 6 pour montrer que cet arbre 6 peut servir aussi à l'entrée d'un couple moteur en vue de l'entraînement en rotation de l'arbre 1. Si ce couple moteur donne lieu sur l'arbre secondaire 6 à une composante axiale, celle-ci est supportée aussi par les butées axiales 11 et 11' ou, selon le sens du couple et l'inclinaison des dentures, elle accroît ou diminue la somme $F_1 + F_2$.

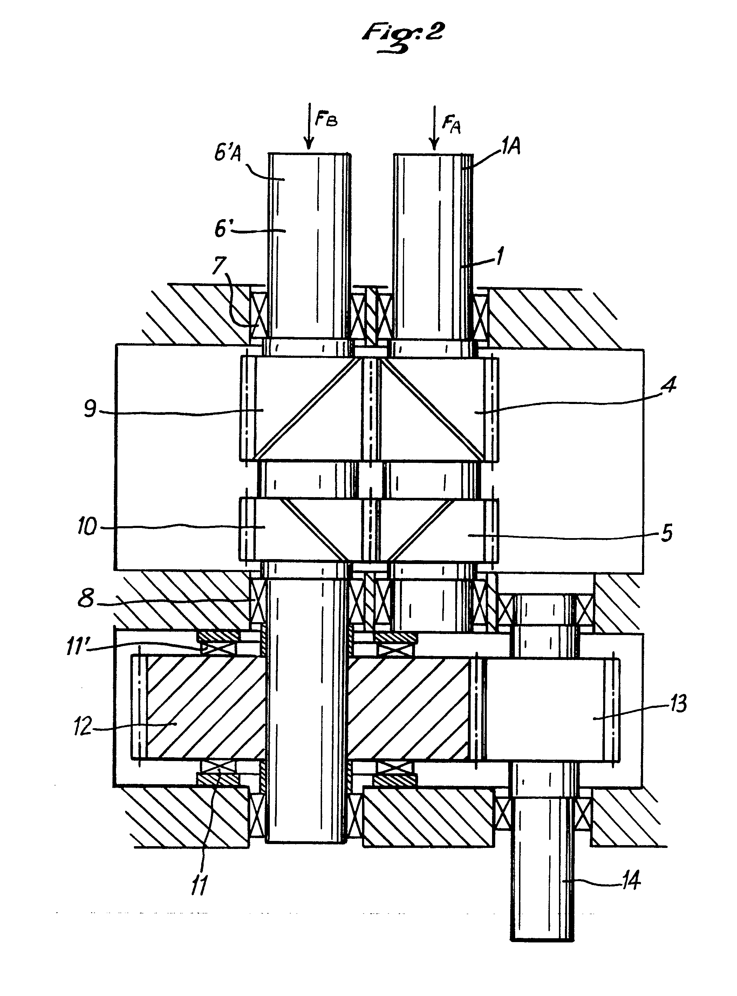

La figure 2 se rapporte à une disposition analogue à celle de la figure 1 où l'on reconnaît l'arbre 1 avec ses deux pignons 4, 5, un arbre secondaire 6' avec ses deux roues dentées 9,10 et ses deux paliers 7,8. Mais cet arbre secondaire 6' est prolongé au-delà de ses deux paliers 7, 8. Du côté du palier 8, l'arbre secondaire 6' s'étend plus loin que l'arbre 1 et il est muni d'une roue dentée 12, dont le diamètre peut être fixé à volonté ; cette roue dentée 12 engrène avec un pignon denté 13, ———————— ———————— calé en rotation sur un arbre moteur 14. La roue dentée 12 est calée en rotation et en translation sur l'arbre secondaire 6' et les butées axiales 11, 11' sont disposées de part et d'autre de cette roue dentée 12.

Ce mode de réalisation permet de rapprocher les deux arbres 1 et 6', de sorte que, sur le côté opposé à celui où se trouve la roue dentée 12, on obtient les deux parties extrêmes rapprochées 1A et 6'A des arbres 1 et 6' que l'on peut accoupler directement aux arbres menés des vis d'une extrudeuse à 2 vis.

Les deux vis d'extrusion engendrent deux forces axiales FA et FB. La force axiale FA exercée sur l'arbre 1 est reportée sur l'arbre 6', comme on l'a expliqué plus haut, où elle s'ajoute à la force axiale FB exercée directement sur l'arbre 6'. Les deux forces axiales FA et FB sont encaissées par la butée axiale 11.

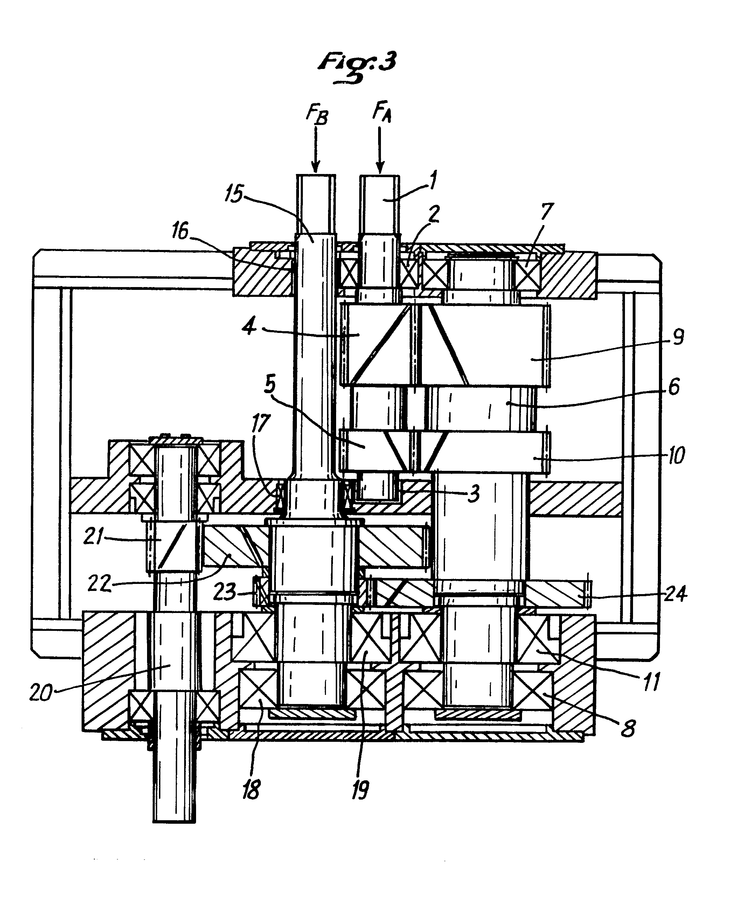

Dans l'exemple de la figure 2 l'arbre tournant 1 est entraîné par l'arbre secondaire 6'. La figure 3 se rapporte à un réducteur pour une machine d'extrusion, où l'on reconnaît à nouveau l'arbre tournant 1 supporté par ses deux paliers 2, 3, muni de deux pignons dentés 4, 5 à inclinaisons opposées, auquel est associé l'arbre secondaire 6 supporté par ses deux paliers 7, 8 et muni de ses deux roues dentées 9, 10 qui engrènent respectivement avec les pignons dentés 4, 5. Le premier arbre tournant 1 est accouplé à une première vis d'extrusion et la force axiale qui est exercée par cette vis d'extrusion sur l'arbre 1 est reportée sur l'arbre secondaire 6 , ce dernier est pourvu à cet effet d'une butée axiale 11.

Il existe un second arbre tournant 15, proche du premier arbre tournant 1, qui est supporté librement en rotation par trois paliers 16, 17, 18 et qui est accouplé à une seconde vis d'extrusion. Ce second arbre tournant 15 est plus long que le premier arbre tournant 1 de sorte qu'il peut être pourvu, au-delà de ce dernier, d'une butée axiale 19, identique à la butée axiale 11 de l'arbre secondaire 6, pour recevoir la poussée axiale FB créée par la seconde vis d'extrusion.

Dans cet exemple, les conditions de fonctionnement nécessitent une adaptation de la vitesse et du couple d'entraînement. Un arbre moteur 20 est muni d'un pignon denté 21, à denture inclinée, qui engrène avec une roue dentée 22 calée sur le second arbre tournant 15. Sur ce dernier est calé un pignon denté 23 qui engrène avec une roue dentée supplémentaire 24 calée sur l'arbre secondaire 6. Ainsi, le couple moteur provenant de l'arbre moteur 20 est transmis au second arbre 15 puis de celui-ci à l'arbre secondaire 6 et enfin au premier arbre tournant 1. Dans ce qui précède, le premier arbre tournant 1 et le second arbre tournant 15 tournent dans le même sens. Dans le cas où ils devraient tourner en sens contraire, le pignon denté 23 et la roue dentée 24 ne seraient plus en prise mais seraient reliés en rotation par un pignon parasite en prise d'un côté avec le pignon denté 23, de l'autre avec la roue dentée 24.

Dans les exemples qui précèdent, le transfert de la charge axiale à partir de l'arbre tournant 1 à l'arbre secondaire 6 se fait directement du premier au second. Il est possible d'interposer entre eux un ou plusieurs pignons intermédiaires quand on désire augmenter la distance qui les sépare.

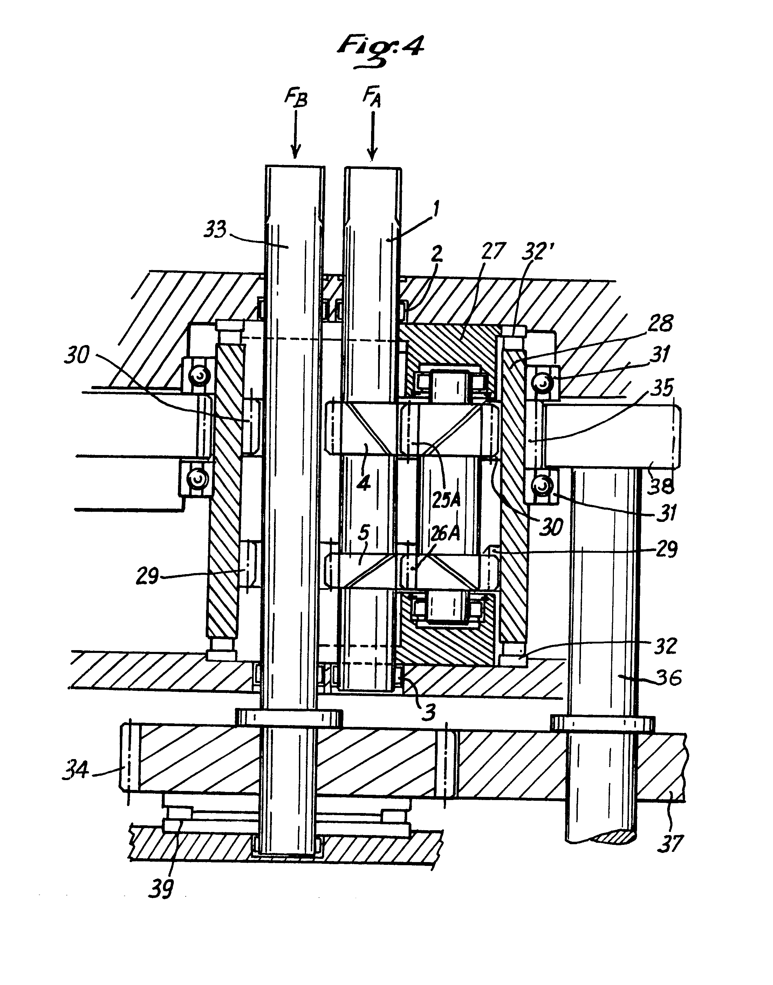

La figure 4 se rapporte à un exemple dans lequel on retrouve l'arbre tournant 1 supporté par ses paliers 2, 3 et muni de ses pignons dentés 4,5. Ces derniers engrènent chacun respectivement avec trois pignons intermédiaires 25A, 25B, 25C et 26A, 26B, 26C. Ces deux jeux de trois pignons intermédiaires sont des pignons satellites montés sur un même porte-satellites 27 immobilisé en rotation. Tous les pignons satellites intermédiaires 25A à 25C et 26A à 26C sont entourés par une couronne 28 ayant deux dentures intérieures distinctes 29, 30 avec lesquelles les deux jeux de pignons engrènent respectivement. Cette couronne 28 est guidée en rotation dans des roulements à billes 31 et immobilisée en translation par des butées axiales 32 et 32'. Les dentures des pignons 4,5 étant inclinées en sens opposées ainsi que celles des pignons intermédiaires satellites, 25A - 25C, 26A - 26C, la force axiale FA qui est exercée sur l'arbre tournant 1 est reportée sur la couronne 28 comme on l'a expliqué plus haut.

Cette variante de réalisation donne la possibilité de monter un second arbre tournant 33 à proximité du premier arbre tournant 1, à l'intérieur de la couronne 28. Ce second arbre 33 est parallèle au premier arbre 1 et il se prolonge en dehors de la couronne 28 plus loin que le premier arbre 1 où il est muni d'une roue dentée 34. La couronne 28 est pourvue d'une denture extérieure 35. Un arbre moteur 36 est équipé de deux pignons 37 et 38 qui engrènent respectivement l'un avec la roue dentée 34 du second arbre 33, l'autre avec la denture extérieure 35 de la couronne 28. De cette façon, l'entraînement en rotation du premier arbre tournant 1 se fait par l'intermédiaire de la couronne 28 et des pignons 25A-C, 26A-C et 4, 5 en même temps que l'entraînement en rotation du second arbre tournant 33 qui se fait par l'intermédiaire de la roue dentée 34. La force axiale FB qui s'exerce sur le second arbre tournant 33 est encaissée par une unique butée axiale 39 placée en arrière de la roue dentée 34 où la place disponible permet de lui donner le diamètre voulu.

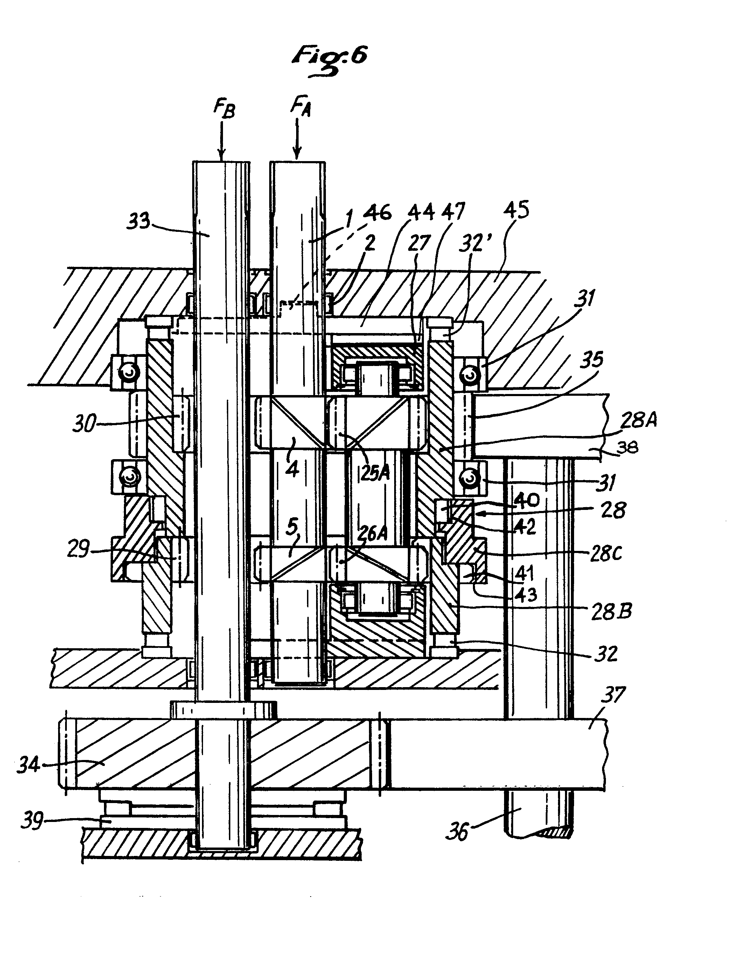

La figure 6 se rapporte à un exemple de réalisation identique dans sa majeure partie à celui des figures 4 et 5. Pour cette raison on a utilisé les mêmes références numériques pour y désigner les mêmes pièces et on se limitera maintenant à en décrire seulement les différences.

Le mécanisme des figures 4 et 5 est réalisable à condition d'exécuter toutes les dentures avec une grande précision, ce qui conduit à une dépense élevée. Dans le cas de la figure 6, on a apporté un perfectionnement qui ramène à une valeur économiquement acceptable la réalisation du report d'une force axiale d'un arbre tournant sur une couronne entourant cet arbre.

La couronne 28 est réalisée en deux parties 28A, 28B qui se succèdent en sens axial, l'une 28A portant la denture intérieure 30 qui engrène avec le jeu des trois pignons satellites 25A à 25C ainsi que la denture extérieure 35 qui engrène avec le pignon 38, l'autre 28B portant la denture intérieure 29 qui engrène avec le jeu des trois pignons satellites 26A à 26C. Ces deux parties 28A, 28B ont chacune une denture extérieure 40, 41 respectivement à proximité de leurs extrémités voisines. La couronne 28 comprend encore un anneau 28C qui entoure les deux parties 28A, 28B dans la zone de leurs dentures 40, 41. Cet anneau 28C a deux dentures intérieures 42, 43 qui engrènent chacune respectivement avec les dentures extérieures 40, 41 des parties 28A, 28B. Les dentures 40,41 sont bombées ; il existe donc une possibilité de jeu en sens transversal entre les parties 28A et 28B et, ainsi, entre les dentures portées par ces deux parties réunies en rotation par l'anneau 28C.

En outre, si on le juge souhaitable, un joint de Oldham 44 est utilisé pour relier le porte-satellites 27 à la paroi fixe 45 du carter qui contient l'ensemble du dispositif. Ce joint 44 a d'un côté une languette 46 montée coulissante dans une rainure correspondante ménagée dans

9 0157059

la paroi 45 ; il a aussi sur son côté opposé trois languettes 47 orthogonales à la languette 46 et montées coulissantes chacune dans une rainure respective correspondante ménagée dans le porte-satellites 27. De cette façon, l'ensemble de ce dernier peut adapter sa position par rapport à l'arbre 1.

Les jeux de fonctionnement ainsi réalisés autorisent l'usinage des dentures avec les tolérances courantes de fabrication.

On remarquera que les charges tangentielles et radiales sur les pignons dentés 4 et 5 du premier arbre tournant 1 sont ici équilibrées. De ce fait l'arbre 1 n'est soumis à aucun effort de flexion.

Bien entendu, dans le cas de plusieurs arbres parallèles, l'invention ne s'oppose pas à ce que chacun soit associé à un arbre secondaire respectif pour en supporter la charge axiale comme on l'a expliqué.

## REVENDICATIONS

1. Dispositif pour encaisser une charge axiale (FA) s'exerçant sur un arbre tournant (1) guidé en rotation dans des paliers (2,3) caractérisé en ce que ce dispositif comprend deux pignons dentés (4,5) à denture inclinée en sens opposés calés sur cet arbre tournant (1) et au moins un arbre secondaire (6) supporté parallèlement à l'arbre tournant (1) et sur lequel sont calées des roues dentées (9,10) à denture inclinée en sens opposés et engrenant respectivement chacune avec les pignons dentés (4,5) de l'arbre (1), cet arbre secondaire (6) étant en outre pourvu d'une butée axiale capable de supporter la charge axiale (FA) qui lui est transmise à travers les dentures des pignons dentés (4,5) et des roues dentées (9,10).

2. Dispositif selon la revendication 1 caractérisé en ce que l'arbre secondaire (6) est accouplé à un arbre moteur et sert à l'entraînement en rotation de l'arbre tournant (1).

3. Dispositif selon la revendication 1 caractérisé en ce que l'arbre tournant (1) a une partie extrême (1A) par laquelle il est accouplé à un premier arbre mené et l'arbre secondaire (6') est prolongé par une partie extrême (6'A) proche de la partie extrême (1A) de l'arbre tournant (1) et par laquelle il est accouplé à un second arbre mené proche du premier arbre mené.

4. Dispositif selon la revendication 1 caractérisé en ce que l'arbre secondaire (6) est prolongé au-delà de l'arbre tournant (1) et muni dans sa partie prolongée d'une roue dentée (12) engrenant avec un pignon moteur (13), au moins une butée axiale (11) étant montée sur un côté de la roue dentée (12) pour encaisser la charge axiale à la fois de l'arbre tournant (1) et de l'arbre secondaire (6).

5. Dispositif selon la revendication 1 caractérisé en ce que au moins un pignon intermédiaire est disposé entre chacun des pignons dentés (4,5) de l'arbre tournant (1) et les roues dentées (9,10) de l'arbre secondaire (6).

6. Dispositif pour encaisser une charge axiale (FA) s'exerçant sur un arbre tournant (1) guidé en rotation dans des paliers (2,3), caractérisé en ce qu'il comprend deux pignons dentés (4,5) à denture inclinée en sens opposés d'un pignon à l'autre calés sur cet arbre tournant (1), deux jeux de plusieurs pignons intermédiaires (25A à 25C - 26A à 26C) montés sur un porte-satellites (27) engrenant respectivement avec les deux pignons dentés (4,5) et avec les deux dentures correspondantes intérieures (29,30) d'une couronne (28) qui entoure les pignons intermédiaires et l'arbre tournant (1), cette couronne (28) étant immobilisée en sens axial à une au moins de ses extrémités par une butée axiale (32) capable de supporter la charge axiale (FA).

7. Dispositif selon la revendication 6, caractérisé en ce que la couronne (28) à dentures intérieures (29, 30) a un diamètre suffisant pour entourer aussi un second arbre tournant (33) parallèle à l'arbre tournant (1).

8. Dispositif selon la revendication 7, caractérisé en ce que le second arbre tournant (33) est prolongé au-delà de la couronne (28) et de l'arbre tournant (1), il est pourvu sur ce prolongement d'une roue dentée motrice (34) à laquelle est associée une butée axiale (39) capable de supporter la charge axiale (FB) exercée sur le second arbre tournant (33).

9. Dispositif selon la revendication 8, caractérisé en ce que la roue dentée motrice (34) engrène avec une roue dentée (37) calée sur un arbre moteur (36) portant aussi un pignon (38) qui engrène avec une denture extérieure (35) de la couronne (28).

10. Dispositif selon la revendication 9, caractérisé en ce que la couronne (28) est réalisée en deux parties (28A, 28B) successives en sens axial, ayant chacune une denture extérieure (40, 41), un anneau (28C) présentant deux dentures intérieures (42,43) entoure les deux parties (28A, 28B) pour engrener respectivement avec elles par ses dentures intérieures (42, 43), une partie (28A) portant la denture intérieure (29) qui engrène avec un jeu de

0157059

12

pignons intermédiaires (25A à 25C), l'autre partie (28B) portant la denture intérieure (30) qui engrène avec l'autre jeu de pignons intermédiaires ( 26A à 26C).

11. Dispositif selon la revendication 9, caractérisé en ce que le porte-satellites (27) est immobilisé en rotation par l'intermédiaire d'un joint de Oldham (44) interposé entre lui et une paroi fixe (45).

12. Dispositif selon la revendication 1, caractérisé en ce que l'arbre tournant (1) est disposé à proximité d'un second arbre tournant (15) munie d'une roue dentée (22) pour son entraînement en rotation, d'une butée axiale (19) et d'un autre pignon denté (23) qui engrène avec une roue dentée supplémentaire (24) calée sur l'arbre secondaire (6) pour l'entraînement en rotation de l'arbre tournant (1).

1/5

0157059

Fig:1

Fig:5

Fig:2

Fig.3

0157059

*Fig.4*

Fig.6

Office européen
des brevets

**RAPPORT DE RECHERCHE EUROPEENNE**

0157059
Numéro de la demande

EP 84 40 2603

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 234 490 (BHS-BAYERISCHE BERGHUTTEN- UND SALZWERKE) <br> * Page 1, lignes 20-28; figure 2 * | 1,2,6 | F 16 H 1/20 |
| Y | FR-A-2 011 374 (S.A. BROWN BOVERI) <br> * Revendication 1 * | 1,2,6 | |
| A | GB-A-2 078 332 (VOITH GETRIEBE) <br> * Figure 1, référence 23 * | 1 | |
| A | DE-B-1 053 270 (EISENHÜTTE WESTFALIA) | | |
| A | US-A-1 536 092 (GUY) | | |

DOMAINES TECHNIQUES RECHERCHES (Int. Cl.4)

F 16 H

Le présent rapport de recherche a été établi pour toutes les revendications

| Lieu de la recherche | Date d'achèvement de la recherche | Examinateur |
|---|---|---|
| LA HAYE | 10-06-1985 | BEERNAERT J.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82